# EUROPÄISCHE PATENTANMELDUNG

(11) **EP 0 642 954 A1**
(43) Veröffentlichungstag der Anmeldung: **15.03.1995**
(21) Anmeldenummer: 94112102.2
(22) Anmeldetag: 03.08.1994
(51) Int. Cl.: B60R 16/02, B60H 1/00

(54) **Aggregat zum Verstellen eines zu einem Kraftfahrzeug gehörenden Bauelements zwischen zwei Endlagen**

(30) Priorität: 09.09.1993 DE 9313639 U
(71) Anmelder: ROBERT BOSCH GMBH, 70442 Stuttgart (DE)
(72) Erfinder: Schmidt, Roland, D-77815 Bühl (DE); Bauer, Peter-Josef, D-77815 Bühl (DE); Schemel, Hans-Peter, D-77815 Bühl (DE); Lamprecht, Paul, D-77830 Bühlertal (DE)

(57) **Zusammenfassung**

Es wird ein Aggregat vorgeschlagen, das zum Verstellen eines zu einem Kraftfahrzeug gehörenden Bauelements (100) zwischen zwei Endlagen dient. Das Stellaggregat (10) umfaßt ein Vorrichtungsgehäuse, in dem ein elektrischer Antriebsmotor sowie ein diesem nachgeordnetes Untersetzungsgetriebe untergebracht sind und das mit dem Bauelement wirkverbundene Getriebeabtriebsrad (32) mit einem die Stellbewegung des Abtriebsrades beeinflussenden Drehpotentiometer (52) zusammenarbeitet, dessen Basisteil (50) mit dem Gehäuse fest verbunden ist. Ein besonders einfacher, kostengünstiger Aufbau des Stellaggregats ist gegeben, wenn das Getriebeabtriebsrad (32) mit einem zentralen Vorsprung (66) in eine Zentralausnehmung (60) des Drehteils des Drehpotentiometers (52) greift.

## Beschreibung

### Stand der Technik

Die Erfindung geht aus von einem Stellaggregat nach der Gattung des Hauptanspruchs. Es ist schon ein Stellaggregat im Handel, bei dem das eine Ende der Welle des Getriebeabtriebsrades mit einem Kugelkopf mittels eines Spannrings in einem Kunststoff-Kugelgelenk gehalten ist, das seinerseits im Drehteil des Drehpotentiometers kraftschlüssig sitzt. Ein solcher Aufbau ist kostenintensiv und erfordert eine unnötig große Lagerhaltung. Darüber hinaus beeinträchtigt die Vielzahl der zwischen Zahnrad und Drehteil des Drehpotentiometers vorhandenen Bauteile die Arbeitsgenauigkeit des Drehpotentiometers.

### Vorteile der Erfindung

Das erfindungsgemäße Stellaggregat mit den kennzeichnenden Merkmalen des Hauptanspruchs hat demgegenüber den Vorteil, daß die Drehmitnahme durch eine einfache Steckverbindung zwischen dem Getriebeabtriebsrad und dem Drehteil des Drehpotentiometers bewerkstelligt wird, die darüber hinaus keine weiteren Bauelemente erfordert.

Durch die in den Unteransprüchen aufgeführten Maßnahmen sind vorteilhafte Weiterbildungen und Verbesserungen des im Hauptanspruch angegebenen Stellaggregats möglich.

### Zeichnung

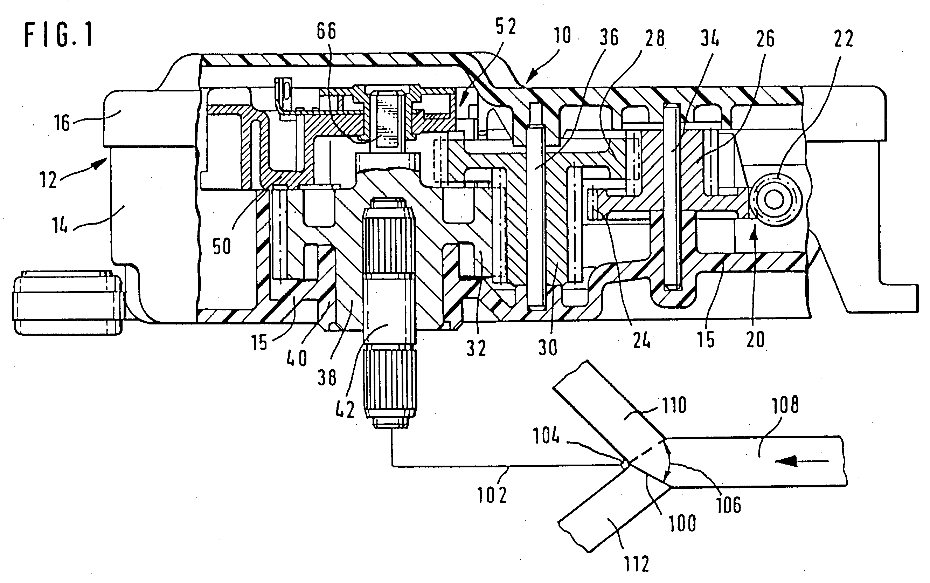

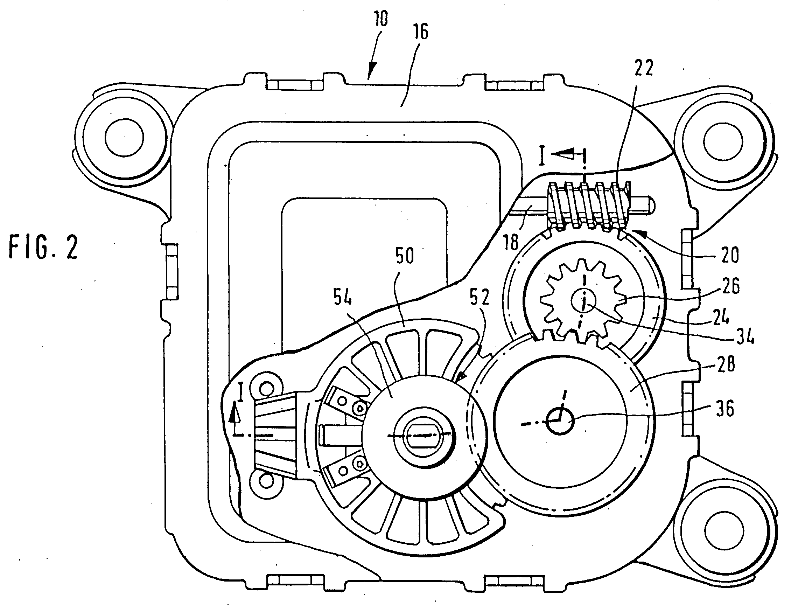

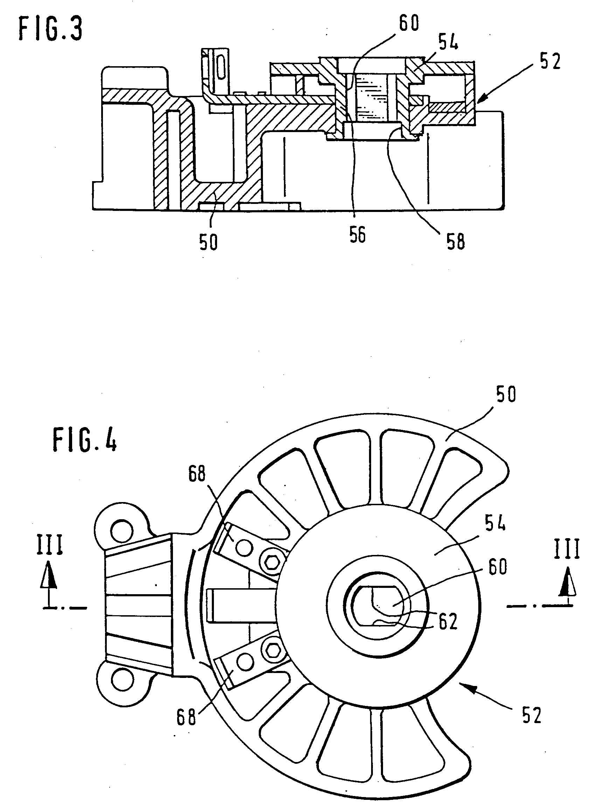

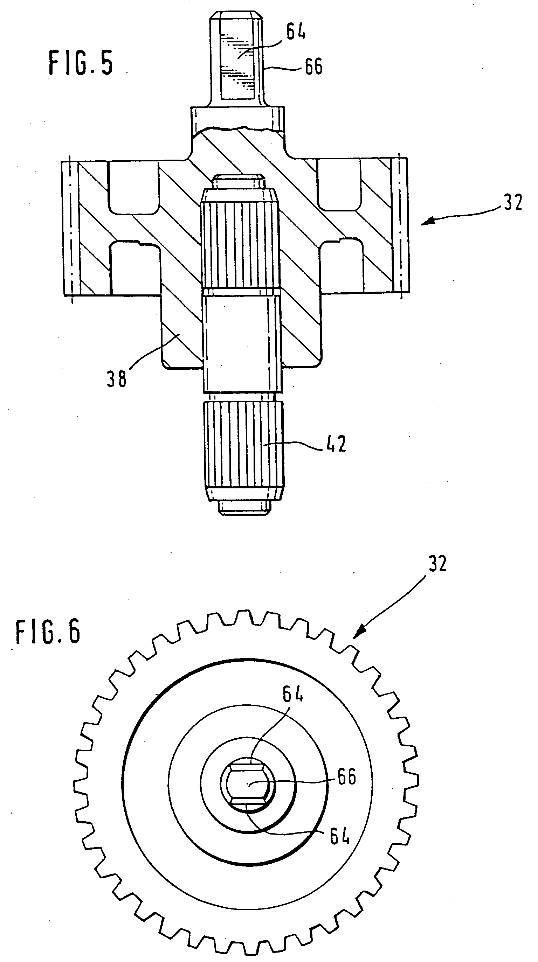

Ein Ausführungsbeispiel der Erfindung ist in der Zeichnung dargestellt und in der nachfolgenden Beschreibung näher erläuert. Es zeigen Figur 1 eine Prinzipdarstellung einer Vorrichtung zum Verstellen einer zur Klimaanlage eines Kraftfahrzeuges gehörenden Heizungsklappe, bei der ein zu dieser gehörendes Stellaggregat entlang der Linie I-I in Figur 2 geschnitten dargestellt ist, Figur 2 eine Draufsicht auf das Stellaggregat gemäß Figur 1, bei dem der Gehäusedeckel teilweise weggebrochen ist, Figur 3 ein zum Stellaggregat gehörender Drehpotentiometer, entlang der Linie III-III in Figur 4 geschnitten, Figur 4 eine Draufsicht auf den Drehpotentiometer gemäß Figur 3, Figur 5 einen Schnitt durch ein zum Stellaggregat gehörendes Getriebeabtriebsrad, und Figur 6 eine Draufsicht auf das Getriebeabtriebsrad gemäß Figur 5.

### Beschreibung des Ausführungsbeispiels

Eine in Figur 1 im Prinzip dargestelltes, zur Klimaanlage eines Kraftfahrzeuges gehörendes Stellaggregat 10 weist ein Gehäuse 12 auf, zu dem ein Gehäusekasten 14 und ein Gehäusedeckel 16 gehören. In dem Aggregatgehäuse 12 ist ein elektrischer Antriebsmotor untergebracht, dessen Abtriebswelle 18 in Figur 2 erkennbar ist. Dem elektrischen Antriebsmotor ist ein als Schneckengetriebe ausgebildetes Untersetzungsgetriebe 20 nachgeordnet, dessen auf der Abtriebswelle 18 des Elektromotors angeordnete Getriebeschnecke 22 mit einem Schneckenrad 24 kämmt. Das Schneckenrad 24 ist mit einem mit dem Schneckenrad fest verbundenen Zahnrad 26 versehen, dessen Verzahnung mit einem weiteren Zahnrad 28 in Eingriff steht. Auch das Zahnrad 28 weist ein weiteres, fest mit ihm verbundenes Zahnrad 30 auf, welches mit einem weiteren Zahnrad 32 kämmt, welches das Getriebeabtriebsrad bildet. Die Zahnräder 26, 28, 30 und 32 sind hinsichtlich ihrer Zähnezahlen so aufeinander abgestimmt, daß die am Schneckenrad 24 zu messenden Drehzahlen weiter untersetzt werden. Dem elektrischen Antriebsmotor ist also ein mehrere Getriebestufen aufweisendes Getriebe nachgeordnet, das neben dem schon erwähnten Schneckengetriebe 20 noch ein mehrstufiges Stirnrad-Untersetzungsgetriebe 26, 28, 30, 32 aufweist. Das Schneckenrad 24 ist zusammen mit seinem Zahnrad 26 auf einer gehäusefesten Achse 34 drehbar gelagert. Auch die Zahnräder 28, 30 sind auf einer gemeinsamen Achse 36 drehbar gelagert, welche ebenfalls im Gehäusekasten 14 sitzt. Den beiden Lagerachsen 34 und 36 sind entsprechende Ausnehmungen im Gehäusedeckel 16 zugeordnet, welche die freien Enden dieser Achsen aufnehmen, wenn der Deckel 16 auf dem Gehäusekasten 14 aufgebracht ist. Das Getriebeabtriebsrad 32 weist an seiner einen Stirnseite einen Lagerzapfen 38 auf, der in einer Lagerbuchse 40 geführt ist, welche Teil des Gehäusekastens 14 ist. Die Bohrung der Lagerbuchse 40 durchdringt den Boden 15 des Gehäusekastens 14. Dabei bildet das innere Ende der Lagerbuchse 40 eine Abstützschulter für das Getriebeabtriebsrad 32, so daß dieses in Achsrichtung nach der einen Seite abgestützt ist. In den Lagerzapfen 38 ist eine Abtriebswelle 42 eingebracht, über die das Antriebsaggregat 10 mit einer Luftklappe 100 durch Übertragungsmittel 102 wirkverbunden ist (Fig. 1). Die Klappe 100 ist um eine Achse 104 in Richtung des Doppelpfeiles 106, je nach Drehrichtung der Abtriebswelle 42 schwenkbar. Mit dem Gehäusekasten 14 ist weiter ein Basisteil 50 eines Drehpotentiometers 52 fest jedoch lösbar verbunden. Das in den Figuren 3 und 4 separat dargestellte Drehpotentiometer 52 weist ein Drehteil 54 auf, das mit einer Führungsbuchse 56 versehen ist. Die Führungsbuchse 56 des Drehteils 54 ist in einer Bohrung 58 des Basisteils 50 drehbar geführt. Eine in der Führungsbuchse 56 angeordnete Zentralausnehmung 60 ist mit zwei zueinander parallelen Mitnahmeflächen 62 versehen, denen zwei Gegenflächen 64 an einem zentralen Vorsprung 66 des Getriebeabtriebsrades 32 dem Lagerbolzen 38 gegenüberliegend angeordnet ist. Wie Figur 1 ausweist, sitzt bei zusammengebautem Aggregat der Vorsprung 66 des Getriebeabtriebsrades 32 in der Zentralausnehmung 60 des Drehteils 54. Durch die miteinander zusammenwirkenden Flächen 62 des Drehteils 60 und 64 des Vorsprungs 66 erfolgt eine gleichartige Bewegung des Getriebeabtriebsrades 32 und des Drehteils 54. Die Anordnung des Drehpotentiometers 52 im Gehäusekasten 14 ist so getroffen, daß die Drehachse des Getriebeabtriebsrades 32 mit der Zentralbohrung des Drehteils 54 fluchtet. An dem Basisteil 50 des Drehpotentiometers 52 sind ferner noch Anschlußmitteil 68 angeordnet, durch welche das Drehpotentiometer 52 mit Steuerleitungen verbunden wird welche zu einer nicht dargestellten Zentralelektronik des Kraftfahrzeuges bzw. der Klimaanlage führen.

Wenn der elektrische Antriebsmotor des Stellaggregats 10 aktiviert wird, läuft die Abtriebswelle 42, je nach Drehrichtung des Motors um und verstellt dadurch über die Übertragungsmittel 102 die Luftklappe 100 um die Schwenkachse 104. Die Luftklappe 100 ist in einem Luftführungskanal 108 angeordnet, der sich im Bereich der Luftklappe 100 in Zweigkanäle 110, 112 teilt. Je nach Stellung der Luftklappe 100 wird entweder der eine Zweigkanal 110 (gestrichelte Darstellung) oder der andere Zweigkanal 112 verschlossen. Es ist klar, daß auch zwischen diesen beiden eben beschriebenen Luftklappen-Endlagen auch jede beliebige Zwischenstellung möglich ist. Die gewünschten Zwischenstellungen werden von der nicht dargestellten elektronischen Steuereinrichtung vorgegeben. Das Drehpotentiometer 52 meldet kontinuierlich jede momentan erreichte Betriebsstellung an diese Elektronik, welche die Signale des Drehpotentiometers 52 entsprechend verarbeitet.

## Patentansprüche

1. Aggregat zum Verstellen eines zu einem Kraftfahrzeug gehörenden Bauelements zwischen zwei Endlagen, mit einem Vorrichtungsgehäuse, in dem ein elektrischer Antriebsmotor sowie ein diesem nachgeordnetes Untersetzungsgetriebe untergebracht sind und das mit dem Bauelement wirkverbundene Getriebeabtriebsrad mit einem die Stellbewegung des Abtriebsrades beeinflussenden Drehpotentiometer zusammenarbeitet, dessen Basisteil mit dem Gehäuse fest verbunden ist, dadurch gekennzeichnet, daß das Getriebeabtriebsrad (32) mit einem zentralen Vorsprung (66) in eine Zentralausnehmung (60) des Drehteils (54) des Drehpotentiometers (52) greift.

2. Aggregat nach Anspruch 1, dadurch gekennzeichnet daß das Basisteil (50) des Drehpotentiometers (52) eine nach dessen Montage im Gehäuse (12) mit der Drehachse des Getriebeabtriebsrades (38) fluchtende Bohrung (58) aufweist, in welcher eine rohrförmige Führungsbuchse (56) des Drehteils (54) drehbar gelagert ist.

3. Aggregat nach Anspruch 2, dadurch gekennzeichnet, daß die Zentralausnehmung (60) der Führungsbuchse (56) eine mit einer Gegenfläche (64) des Vorsprungs (66) zusammenwirkende Mitnahmefläche (62) aufweist.

4. Aggregat nach einem der Ansprüche 1 bis 3, dadurch gekennzeichnet, daß das Basisteil (50) des Drehpotentiometers (52) die Anschlußmittel (68) für die zu diesem führenden Steuerleitungen aufweist.
